Europäisches Patentamt

European Patent Office

Office européen des brevets

(19)

(11) **EP 1 231 614 A1**

(12) # EUROPEAN PATENT APPLICATION

(43) Date of publication:
**14.08.2002 Bulletin 2002/33**

(51) Int Cl.[7]: **H01F 1/34**, H01F 1/36,
C04B 35/26

(21) Application number: **02002977.3**

(22) Date of filing: **11.02.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **13.02.2001 JP 2001036214**

(71) Applicant: **TDK Corporation
Chuo-ku, Tokyo (JP)**

(72) Inventors:
• **Yokoyama, Ryo
Chuo-ku, Tokyo (JP)**
• **Saito, Yutaka
Chuo-ku, Tokyo (JP)**

(74) Representative: **Grünecker, Kinkeldey,
Stockmair & Schwanhäusser Anwaltssozietät
Maximilianstrasse 58
80538 München (DE)**

(54) **Oxide magnetic material and core using the same**

(57)    An oxide magnetic material is made of a composition containing 46.0 to 50.0 mol% of $Fe_2O_3$, 20.0 to 30.0 mol% of ZnO, 7.1 to 10.0 mol% of CuO, 1.0 or less mol% (excluding 0 mol%) of MgO, and a residual of NiO. A coil part has a core made of this oxide magnetic material.

## FIG. 1

**Description**

**Background of the Invention**

Field of the Invention

The present invention relates to an oxide magnetic material for cores of a choke coil and an inductor, and a coil part using this oxide magnetic material for its core.

Description of the Related Art

In recent years, downsizing and weight reduction of various kinds of electronic apparatus have been advanced exponentially. In accordance therewith, there has grown rapidly a demand for smaller size and higher performance of electronic parts for electric circuits of such electronic apparatus.

As a magnetic material for a power supply choke coil which is one of such electronic parts, Ni-Zn based ferrite is often used for the following reasons. That is, Ni-Zn based ferrite is so high in resistivity that it can be used in the form of direct winding. Thus, the power supply choke coil can be made small in size and low in cost. In addition, Ni-Zn based ferrite is so high in Curie temperature that the temperature characteristics of saturated magnetic flux density Bs are excellent.

However, the saturated magnetic flux density Bs of Ni-Zn based ferrite is generally lower than that of Mn-Zn based ferrite. Therefore, as a magnetic material used for a power supply choke coil, Ni-Zn based ferrite has been requested to have higher Bs. As well as such a request, there has been another request for improvement and addition of other properties required for manufacturing cores as power supply choke coil parts.

Specifically, the following requests have been made:

(1) Increase of saturated magnetic flux density Bs so as not to be saturated against a high magnetic field generated by application of a high current, that is, so as to improve DC superimposition characteristics;
(2) Increase initial magnetic permeability $\mu i$ to obtain desired inductance even if the number of wire turns is reduced to thereby reduce a DC resistance value for the purpose of saving power consumption;
(3) Improvement of the temperature characteristics of the initial magnetic permeability $\mu i$ so as to keep excellent DC superimposition characteristics even in a high operating temperature range; and
(4) Prevention of inductance from changing due to resin molding when electronic parts are surface-mounted, that is, to keep stress-resisting characteristics excellent.

In addition, about the properties of a magnetic material for power supply inductors, there have been requests similar to those of the power supply choke coils.

In response to these requests, Japanese Patent Laid-Open No. Hei. 6-295811 discloses an oxide soft magnetic material obtained by adding Mo oxide not higher than 3,000 ppm in terms of $MoO_3$ to a basic composition containing 48 to 50 mol% of $Fe_2O_3$, 15 to 25 mol% of ZnO, 2.5 or less mol% of CuO, 22 to 37 mol% of NiO, and a residual of unavoidable impurities. The same publication says that high Bs and high $\mu i$ can be realized by setting the composition of an oxide soft magnetic material within the above-mentioned range. However, the same publication says nothing about the change of inductance when external stress is applied.

In addition, Japanese Patent Laid-Open No. Sho. 63-275104 discloses an oxide magnetic material characterized in that 0.1 to 3.0 wt% of $Sb_2O_3$ is added to Ni-Zn based ferrite composed of 40 to 55 mol% of $Fe_2O_3$, 5 to 50 mol% of NiO, 0 to 20 mol% of CuO, and 0 to 30 mol% of ZnO. According to the same publication, an oxide magnetic material satisfying magnetic permeability, temperature characteristics and compression characteristics simultaneously can be provided by setting the composition of the oxide magnetic material within the above-mentioned range. The same publication indeed refers to the compression characteristics, but discloses no specific data about the compression characteristics.

Japanese Patent Laid-Open No. Hei. 5-3112 discloses an oxide magnetic material characterized in that Ni-Cu-Zn based ferrite is adopted as a main component, and any one kind of $Nb_2O_5$ ranging from 0.2 to 0.8 wt%, $Ta_2O_5$ ranging from 0.3 to 1.2 wt% and $MoO_3$ ranging from 0.15 to 1.35 wt% is added as a subsidiary component to this main component. According to the same publication, an oxide magnetic material having high initial magnetic permeability and a low temperature coefficient of the initial magnetic permeability can be provided by making the oxide magnetic material have the above-mentioned composition. However, the same publication discloses nothing about saturated magnetic flux density Bs and stress-resisting characteristics. It cannot be said that the oxide magnetic material having this composition satisfies all the properties required of used for a power supply choke coil and a power supply inductor.

In addition, Japanese Patent Laid-Open No. Hei. 1-103953 discloses a ferrite material characterized in that 0.05 to 2.0 wt% of $Bi_2O_3$ is contained in Ni-Cu-Zn based ferrite which is composed of 40 to 50 mol% of $Fe_2O_3$, 20 to 35 mol% of ZnO, 3 to 10 mol% of CuO, and a residual of NiO, and in which at most 1/2 of NiO is substituted by MgO and/or (1/4) ($Li_2O+ Fe_2O_3$) and/or Mn oxide. According to the same publication, a ferrite material having high initial magnetic permeability $\mu i$, high saturated magnetic flux density Bs and high strength and superior in resistance to thermal shock can be provided by making the ferrite material have the above-mentioned composition. The same publication indeed refers to mechanical strength of the ferrite material, but says nothing about compression characteristics of the initial magnetic permeability, that is, stress-resisting characteristics.

Japanese Patent Laid-Open No. Hei. 3-93667 discloses a magnetic material characterized in that 0.1 to 12 wt% of $Bi_2O_3$ and 0.05 to 4.0 wt% of $SiO_2$ are contained in a spinel type composition which is composed of 25 to 40 mol% of $Fe_2O_3$, 0 to 20 mol% of ZnO, and a residual of NiO and CuO, and in which NiO is substituted by 0.1 to 20 mol% of MgO. According to the same publication, a magnetic material excellent in compression characteristics and magnetic field characteristics can be provided by making the magnetic material have the above-mentioned composition. However, initial magnetic permeability $\mu i$ of the magnetic material shown in Example of the same publication is approximately in a range of from 5 to 10, and the same publication says nothing about saturated magnetic flux density Bs. Therefore, it cannot be said that this magnetic material satisfies all the properties required of cores for a power supply choke coil and a power supply inductor.

Japanese Patent Laid-Open No. Hei. 10-335131 discloses an oxide magnetic material characterized in that Ni-Mg-Cu-Zn based ferrite is adopted as a main component, and 2.16 to 3.95 wt% of PbO, 0.80 to 1.63 wt% of $SiO_2$ and 1.4 to 3.0 wt% of $Nb_2O_3$ are contained as subsidiary components in addition to this main component, or 0.01 to 0.10 wt% of $Co_3O_4$ is further contained in addition to the subsidiary components. According to the same publication, a magnetic material having high initial magnetic permeability $\mu i$ and a low temperature coefficient can be provided by making the magnetic material have the above-mentioned composition. However, initial magnetic permeability $\mu i$ of the magnetic material shown in Example of the same publication is approximately in a range of from 18 to 69, and the same publication says nothing about saturated magnetic flux density Bs and stress-resisting characteristics. Therefore, it cannot be said that this magnetic material satisfies all the properties required of cores used for a power supply choke coil and a power supply inductor.

In addition, Japanese Patent Laid-Open No. 2000-306719 discloses an oxide magnetic material which is composed of 48 to 50 mol% of $Fe_2O_3$, 20 to 32 mol% of ZnO, 3 to 7 mol% of CuO and a residual of NiO, and in which 0 to 5 mol% of ZnO is substituted by MgO, while the average crystalline grain size of a sintered product is not smaller than 5 $\mu m$. According to the same publication, an oxide magnetic material having high specific resistance and low loss can be provided by making the magnetic material have the above-mentioned composition. However, the same publication says nothing about the change of inductance when external stress is applied, that is, stress-resisting characteristics. Therefore, it cannot be said that this magnetic material satisfies all the properties required of cores used for a power supply choke coil and a power supply inductor, particularly for a resin-mold type power supply choke coil and a resin-mold type power supply inductor.

As described above, in the conventional magnetic materials, there was no magnetic material high in saturated magnetic flux density Bs and initial magnetic permeability $\mu i$, excellent in temperature characteristics of the initial magnetic permeability $\mu i$ and excellent in stress-resisting characteristics.

**Summary of the Invention**

It is therefore an object of the present invention to provide an oxide magnetic material high in saturated magnetic flux density Bs and initial magnetic permeability $\mu i$, excellent in temperature characteristics of the initial magnetic permeability $\mu i$ and excellent in stress-resisting characteristics, and a coil part having a core using the same oxide magnetic material.

An oxide magnetic material according to Claim 1 is characterized by being made of a composition containing 46.0 to 50.0 mol% of $Fe_2O_3$, 20.0 to 30.0 mol% of ZnO, 7.1 to 10.0 mol% of CuO, 1.0 or less mol% (excluding 0 mol%) of MgO, and a residual of NiO.

A coil part according to Claim 2 is characterized by including a core made of an oxide magnetic material according to Claim 1.

By setting the composition within the above-mentioned range, the oxide magnetic material according to the present invention can be made high in saturated magnetic flux density Bs, high in initial magnetic permeability $\mu i$, excellent in temperature characteristics of the initial magnetic permeability $\mu i$ and excellent in stress-resisting characteristics.

Here, the reason why the respective components of the composition are set as mentioned above is just as follows. When $Fe_2O_3$ of the respective components is lower than 46.0 mol%, the density of a sintered product lowers. Then, in the range where $Fe_2O_3$ has exceeded its stoichiometric composition, the density of a sintered product and the specific resistance as a core begin to lower due to precipitation of $Fe_3O_4$ in firing in the air. Such precipitation appears conspicuously in the range where $Fe_2O_3$ exceeds 50.0 mol%.

In addition, when CuO is lower than 7.1 mol%, the sintering characteristics of the magnetic material deteriorate so that the density of a sintered product lowers. Thus, the physical strength of the core is lowered. On the other hand, when CuO exceeds 10.0 mol%, the specific resistance of the core is lowered.

In addition, when ZnO is lower than 20.0 mol%, the initial magnetic permeability $\mu i$ is lowered. On the other hand, when ZnO exceeds 30.0 mol%, the Curie temperature becomes low, causing a problem in practical use.

In addition, when MgO is contained, an excellent value can be obtained in each of the saturated magnetic flux density Bs, the temperature characteristics of the initial magnetic permeability $\mu i$ and the stress-resisting characteristics. On the other hand, when MgO is not contained, it is difficult to make all of these three properties excellent at the same time. When this MgO exceeds 1.0 mol%, the saturated magnetic flux density Bs lowers, and the temperature characteristics of the initial magnetic permeability $\mu i$ and the stress-resisting characteristics also deteriorate.

In addition, according to the present invention, NiO is contained as a residual for the main components. This is a residual after adjusting various properties with other components. Here, when NiO is not contained, the specific resistance lowers, and the stress-resisting characteristics also deteriorate.

**Brief Description of the Drawings**

Fig. 1 is a partially see-through perspective view showing an embodiment of a choke coil according to the present invention.
Fig. 2 is a partially see-through perspective view showing an embodiment of an inductor according to the present invention.

**Detailed Description of the Preferred Embodiments**

A magnetic material according to the present invention is made of the above-mentioned composition. For example, the magnetic material is manufactured as follows. Iron oxide, copper oxide, zinc oxide, magnesium oxide and nickel oxide are basically used as raw materials for the respective components. As for magnesium, other magnesium compounds such as $Mg(OH)_2$ and the like may be used so that the constitutive ratio of magnesium in terms of MgO is set within the above-mentioned range in a magnetic material obtained finally. The respective raw materials are mixed so that a final composition has the above-mentioned composition ratio.

Next, the mixture is calcined. Normally, the calcination may be carried out in the air. It is preferable that the calcination temperature is set to be in a range of from 800°C to 1,100°C, and the calcination time is set to be in a range of from 1 hour to 3 hours.

Next, the obtained calcined product is ground to have a predetermined grain size by a ball mill or the like. After the calcined product has been ground, a proper quantity of suitable binder such as polyvinyl alcohol or the like is added to the calcined product, which is then formed into a predetermined shape.

Next, the formed element is fired. Normally the firing may be carried out in the air. It is preferable that the firing temperature is set to be approximately in a range of from 900°C to 1,200°C, and the firing time is set to be in a range of from 2 hours to 5 hours.

A coil part according to the present invention can be obtained as follows. That is, the above-mentioned magnetic material according to the present invention is processed in a core having a predetermined shape. Then, necessary winding is applied to the core, and subjected to resin molding or the like in accordance with necessity. Incidentally, in order to form the core into a predetermined shape, a method of forming before firing may be adopted as described previously, or a method of processing after firing may be adopted.

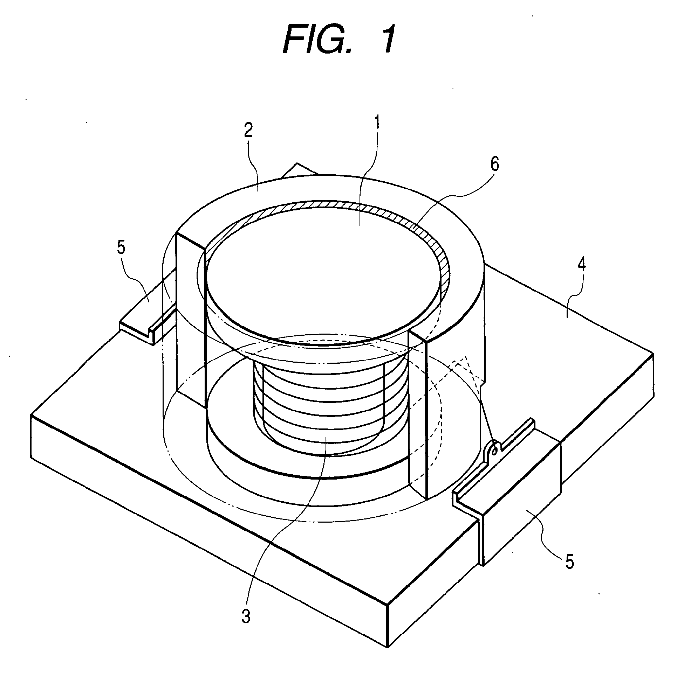

Fig. 1 is a partially see-through perspective view showing a constructional example of a choke coil using ferrite cores (a drum core 1 and a ring core 2) made of a magnetic material according to the present invention. In Fig. 1, a winding wire 3 is wound around the drum core 1. Resin 6 is filled between the drum 1 with the winding wire 3 wound thereon and the ring core 2, while these cores 1 and 2 are bonded onto a base 4. A pair of terminal electrodes 5 are fixed to the base 4, and opposite ends of the winding wire 3 are connected to the respective terminal electrodes 5.

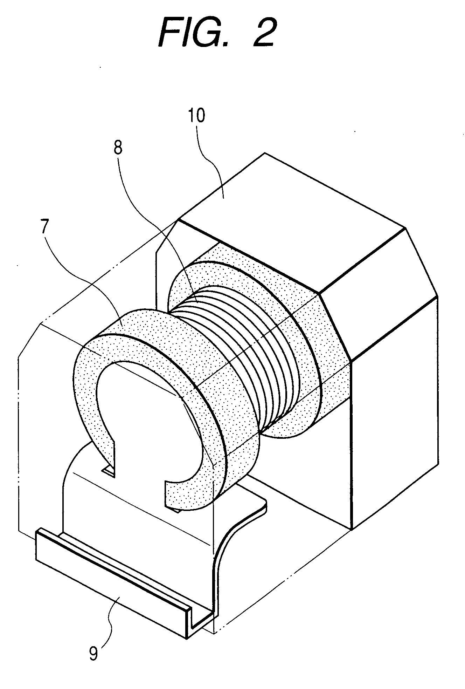

Fig. 2 is a partially see-through perspective view showing a constructional example of a chip inductor using a ferrite core made of a magnetic material according to the present invention. The chip inductor in this embodiment has a drum type core 7, a winding wire 8, terminal electrodes 9, and a mold material 10. The core 7 is formed from the ferrite according to the present invention and has large-diameter collar portions on its opposite ends. The winding wire 8 is wound around a trunk portion of the core 7. The terminal electrodes 9 connect end portions of the winding wire 8 to an external electric circuit, and fixes the core 7 into resin (the mold material 10). The mold material 10 is provided to cover the outside of these members.

The configuration of a choke coil or a chip inductor is not limited to the illustrated embodiments, but various forms can be adopted. For example, a choke coil may be configured so that resin is poured into a pot core with a center leg, and a plate-like ferrite core is combined to cap an opening portion of the pot core so as to enclose the resin. In addition, for example, an inductor may be configured so that a coil assembly in which a winding wire, a lead wire, etc. are provided on a core is inserted into a box-shaped resin case, and an opening portion is sealed with a mold material.

Raw materials of respective components were weighed to have each composition ratio shown in Table 1, and mixed by a ball mill for 5 hours. Incidentally; Samples 1 to 8 in Table 1 are examples within the composition range of the present invention, while Samples 9 to 14 are comparative examples out of the composition range of the present invention.

The mixture obtained as described above was calcined in the air at 900°C for 2 hours, then mixed and ground by the ball mill for 20 hours. The ground mixture was dried, and 1.0 wt% polyvinyl alcohol was added thereto. After that, the mixture was pressed and formed at the pressure 100 kPa so as to obtain a rectangular formed element measuring 50 mm by 10 mm by 7 mm and a toroidal formed element measuring 20 mm in outer diameter, 10 mm in inner diameter and 5 mm in height. These formed elements were fired in the air for 2 hours at each temperature shown in Table 1 so as to obtain a rectangular core sample and a toroidal core sample made of a magnetic material.

A wire was wound around a center portion of the above-mentioned rectangular core sample by 14 turns. After that, uniaxial compressive force was applied to this at a constant speed, and an inductance value at this time was measured successively. The ratio of inductance change was calculated from the obtained measured values. The ratio $\Delta L/L$ of change in inductance value when uniaxial compressive force of 50 kPa was applied is shown in Table 1. Here, L designates inductance before the compression, and $\Delta L$ designates a variation of inductance caused by the compression, that is, a value obtained by subtracting the inductance before the compression from the inductance at the time of the compression.

Incidentally, the uniaxial compression was carried out by a load tester made by Aikoh Engineering Co., Ltd. (measuring stand MODEL 1321, measuring amplifier MODEL 1011 CREEP, and load cell MODEL 3800). The inductance values were measured by a precision LCR meter 4284A made by Hewlett-Packard Company.

In addition, a wire was wound around the toroidal core sample by 20 turns. After that, an inductance value was measured by the above-mentioned LCR meter, and initial magnetic permeability $\mu i$ at 100 kHz and relative temperature coefficients $\alpha\mu ir$ in the range of from -20°C to 20°C and in the range of from 20°C to 60°C were obtained in accordance with Equation 1. Incidentally, in Equation 1, $T_1$ and $T_2$ designate temperatures with which the magnetic permeability was measured, respectively, and $\mu i_1$ and $\mu i_2$ designate initial magnetic permeability at the temperatures $T_1$ and $T_2$ respectively.

Table 1

| Sample No. | Constitutive Ratio (mol%) | | | | | Firing Temperature (°C) | Properties | | | | |
|---|---|---|---|---|---|---|---|---|---|---|---|
| | $Fe_2O_3$ | NiO | CuO | ZnO | MgO | | $\mu i$ | Bs (mT) | $\alpha\mu ir$(-20 to 20°C) (ppm/°C) | $\alpha\mu ir$(20 to 60°C) (ppm/°C) | $\Delta L/L$ (%) |
| 1 | 48.50 | 17.00 | 7.90 | 26.50 | 0.10 | 1030 | 566 | 408 | 8.7 | 7.2 | -2.2 |
| 2 | 48.50 | 17.00 | 9.00 | 25.25 | 0.25 | 1030 | 504 | 415 | 9.6 | 5.9 | -1.8 |
| 3 | 48.50 | 17.00 | 8.00 | 26.25 | 0.25 | 1060 | 580 | 410 | 8.4 | 4.7 | -1.8 |
| 4 | 48.25 | 17.00 | 8.00 | 26.25 | 0.50 | 1060 | 566 | 407 | 8.5 | 4.5 | -1.8 |
| 5 | 48.25 | 17.50 | 7.50 | 26.25 | 0.50 | 1090 | 574 | 408 | 9.5 | 7.6 | -2.2 |
| 6 | 48.50 | 17.50 | 7.50 | 26.25 | 0.25 | 1060 | 603 | 410 | 9.1 | 7.8 | -2.6 |
| 7 | 48.50 | 17.00 | 7.50 | 26.25 | 0.75 | 1030 | 559 | 406 | 8.1 | 5.1 | -2.5 |
| 8 | 48.75 | 17.00 | 8.00 | 25.25 | 1.00 | 1060 | 530 | 405 | 9.3 | 6.8 | -2.7 |
| 9 (Comparative) | 46.75 | 18.50 | 9.00 | 25.75 | | 1030 | 383 | 400 | 8.6 | 3.5 | -1.0 |
| 10 (Comparative) | 48.75 | 17.00 | 9.00 | 25.25 | | 1030 | 475 | 432 | 11.5 | 11.5 | -3.0 |
| 11 (Comparative) | 48.75 | 18.75 | 6.00 | 26.50 | | 1090 | 590 | 413 | 9.8 | 12.4 | -3.2 |
| 12 (Comparative) | 48.50 | 17.00 | 8.00 | 26.50 | | 1060 | 577 | 411 | 11.1 | 12.7 | -2.5 |
| 13 (Comparative) | 48.75 | 17.00 | 7.00 | 25.25 | 2.00 | 1060 | 513 | 404 | 10.7 | 11.9 | -3.0 |
| 14 (Comparative) | 48.75 | 17.00 | 6.00 | 25.25 | 3.00 | 1090 | 501 | 401 | 12 | 13.9 | -3.3 |

[Equation 1] $$\alpha\mu ir = \frac{\mu i_2 - \mu i_1}{\mu i_1{}^2} \cdot \frac{1}{T_2 - T_1}$$

In addition, a secondary winding wire was wound by 40 turns around the above-mentioned toroidal sample used for measurement of the initial magnetic permeability $\mu i$ and the relative temperature coefficients $\alpha\mu ir$. After that, saturated magnetic flux density Bs was measured by a B·H curve tracer made by Riken Denshi. Co., Ltd, while a magnetic field of 4 kA/m was applied. These results are shown in Table 1.

As is understood from Table 1, in Samples 1 to 8 in which $Fe_2O_3$, ZnO and CuO are within the above-mentioned composition range according to the present invention, NiO is contained, and 1 or less mol% of MgO is contained, a high value not lower than 500 can be obtained as the initial magnetic permeability $\mu i$, and a high value not lower than 400 mT can be also obtained as the saturated magnetic flux density Bs. In addition, in these Samples 1 to 8, the relative temperature coefficient $\alpha\mu ir$ of inductance can be controlled to be lower than 10 in the temperature range of from -20°C to 20°C and in the temperature range of from 20°C to 60°C. In addition, in these Samples 1 to 8, the ratio ΔL/L of change in inductance value is higher than -3.0. Thus, excellent stress-resisting characteristics could be obtained. Particularly in consideration of the stress-resisting characteristic (the ratio of change in inductance value) ΔL/L, it is more preferable that the MgO content by percentage is in a range of from 0.1 mol% to 0.75 mol%.

On the other hand, in the case of Samples 9 to 14 in which the MgO content is zero or not lower than 2 mol%, the relative temperature coefficient $\alpha\mu ir$ of inductance reaches a value exceeding 10 in at least one or both of the temperature range of from -20°C to 20°C and the temperature range of from 20°C to 60°C. In addition, in Samples 10 to 14, absolute values of the stress-resisting characteristic ΔL/L increases to 3.0 or more.

As has been described in detail above, a magnetic material according to the present invention is high in saturated magnetic flux density Bs and initial magnetic permeability $\mu i$, excellent in temperature characteristics of the initial magnetic permeability $\mu i$ and also excellent in stress-resisting characteristics. That is, the magnetic material can satisfy all the properties required of a magnetic material for cores of a power supply choke coil and a power supply inductor. Accordingly, by using the magnetic material according to the present invention, it is possible to provide a high-quality power supply choke coil and a high-quality power supply inductor.

## Claims

1. An oxide magnetic material comprising:

   a composition containing 46.0 to 50.0 mol% of $Fe_2O_3$, 20.0 to 30.0 mol% of ZnO, 7.1 to 10.0 mol% of CuO, 1.0 or less mol% of MgO, and a residual of NiO.

2. The oxide magnetic material according to Claim 1,
   wherein said composition contains 0.1 to 0.75 mol% of MgO.

3. A coil part comprising:

   a core made of an oxide magnetic material including a composition containing 46.0 to 50.0 mol% of $Fe_2O_3$, 20.0 to 30.0 mol% of ZnO, 7.1 to 10.0 mol% of CuO, 1.0 or less mol% of MgO, and a residual of NiO.

4. The oxide magnetic material according to Claim 3,
   wherein said composition contains 0.1 to 0.75 mol% of MgO.

# FIG. 1

## FIG. 2

European Patent
Office

**EUROPEAN SEARCH REPORT**

Application Number

EP 02 00 2977

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 013, no. 523 (C-657), 21 November 1989 (1989-11-21) & JP 01 212234 A (MITSUBISHI ELECTRIC CORP), 25 August 1989 (1989-08-25) * abstract * | 1-4 | H01F1/34 H01F1/36 C04B35/26 |
| A | PATENT ABSTRACTS OF JAPAN vol. 1996, no. 10, 31 October 1996 (1996-10-31) & JP 08 151258 A (TAIYO YUDEN CO LTD), 11 June 1996 (1996-06-11) * abstract * | 1-4 | |
| A | EP 0 891 955 A (TDK CORP) 20 January 1999 (1999-01-20) * claims 1,3-5,9 * * page 4, line 18 - line 27 * * example 1 * * figure 1 * | 1-4 | |

TECHNICAL FIELDS SEARCHED (Int.Cl.7)

H01F
C04B

The present search report has been drawn up for all claims

| Place of search | Date of completion of the search | Examiner |
|---|---|---|
| THE HAGUE | 18 March 2002 | Stichauer, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on. or after the filing date
D : document cited in the application
L : document cited for other reasons

& : member of the same patent family, corresponding document

**EP 1 231 614 A1**

## ANNEX TO THE EUROPEAN SEARCH REPORT
## ON EUROPEAN PATENT APPLICATION NO.

EP 02 00 2977

18-03-2002

| Patent document cited in search report | | Publication date | Patent family member(s) | | Publication date |
|---|---|---|---|---|---|
| JP 01212234 | A | 25-08-1989 | JP | 2550639 B2 | 06-11-1996 |
| JP 08151258 | A | 11-06-1996 | JP | 3167561 B2 | 21-05-2001 |
| EP 0891955 | A | 20-01-1999 | JP | 11087126 A | 30-03-1999 |
| | | | CN | 1211049 A | 17-03-1999 |
| | | | DE | 69801552 D1 | 11-10-2001 |
| | | | EP | 0891955 A1 | 20-01-1999 |
| | | | US | 6033594 A | 07-03-2000 |

EPO FORM P0459